(19) Europäisches Patentamt

European Patent Office

Office européen des brevets

(11) **EP 1 188 099 B1**

(12) **EUROPÄISCHE PATENTSCHRIFT**

(45) Veröffentlichungstag und Bekanntmachung des Hinweises auf die Patenterteilung:
**20.11.2002 Patentblatt 2002/47**

(21) Anmeldenummer: **00934897.0**

(22) Anmeldetag: **12.04.2000**

(51) Int Cl.⁷: **G05D 3/00**, G01B 5/14, G05B 19/41, G01D 9/42

(86) Internationale Anmeldenummer:
**PCT/DE00/01134**

(87) Internationale Veröffentlichungsnummer:
**WO 00/067088 (09.11.2000 Gazette 2000/45)**

(54) **VERFAHREN UND VORRICHTUNG ZUR LINEARITÄTSMESSUNG**

METHOD AND DEVICE FOR MEASURING LINEARITY

PROCEDE ET DISPOSITIF DE MESURE DE LINEARITE

(84) Benannte Vertragsstaaten:
**DE FR GB IT**

(30) Priorität: **03.05.1999 DE 19920169**

(43) Veröffentlichungstag der Anmeldung:
**20.03.2002 Patentblatt 2002/12**

(73) Patentinhaber: **Heidelberger Druckmaschinen Aktiengesellschaft**
**69115 Heidelberg (DE)**

(72) Erfinder:
• **MELZER, Peter**
  **D-24146 Kiel (DE)**
• **HAUSHAHN, Volker**
  **D-24111 Kiel (DE)**
• **WIRTZ, André**
  **D-24211 Preetz (DE)**

(56) Entgegenhaltungen:
**US-A- 4 649 497      US-A- 4 755 952**
**US-A- 5 152 166      US-A- 5 258 931**

**Beschreibung**

Die Erfindung betrifft ein Verfahren und eine Vorrichtung zur Linearitätsmessung bei einem Reproduktionsgerät, das einen Arbeitswagen enthält, der eine Abtastoder Aufzeichnungsvorrichtung trägt und der in diskreten Schritten entlang einer geraden Strecke verfahrbar ist.

Reproduktionsgeräte, die einen Arbeitswagen mit einer Abtast- oder Aufzeichnungsvorrichtung enthalten, sind zum Beispiel Scanner, Graviermaschinen oder Belichter für Druckplatten, Filme, Folien, Papier usw. Der Antrieb des Arbeitswagens erfolgt in der Regel über formschlüssig verbundene Kraftübertragungselemente, zum Beispiel Spindeln, Zahnstangen, Zahnriemen und/ oder Zahnräder. Derartige Kraftübertragungselemente weisen herstellungsbedingte Fehler auf, die die Linearität des Vorschubweges beeinträchtigen können, so daß sie bei der verlangten hohen Auflösung von Reproduktionsgeräten berücksichtigt werden müssen.

Zum Beispiel bei Belichtern fordert man für beide Richtungen der Aufbelichtung eine Linearität von weniger als 0,01% ($1 \times 104^{-4}$). Das heißt, bezogen auf 1 Meter darf die Linearitätsabweichung nicht mehr als +/- 50μm betragen. Um diese Genauigkeit in der Vorschubrichtung des Arbeitswagens zu erzielen, benötigt man hochpräzise Kraftübertragungselemente wie zum Beispiel Transportspindeln, die nach dem Kugelumlaufprinzip arbeiten und einen Steigungsfehler von weniger als 1 μm pro Umdrehung haben. Derartige Antriebselemente, wie sie es zum Beispiel zur Übertragung von Kräften in Präzisionswerkzeugmaschinen gibt, sind sehr kostspielig. Außerdem sind sie für die Verwendung in Reproduktionsgeräten überdimensioniert, da die bei Reproduktionsgeräten zu übertragenden Kräfte relativ klein sind. Für die drehmomentschwachen Antriebsmotoren in Belichtem haben sie mit ihren konstruktionsdedingten Drehmomentschwankungen sogar erhebliche Nachteile.

Bei Reproduktionsgeräten wäre es an sich möglich, einfachere und somit weniger genaue Antriebselemente zu verwenden, wenn man den Linearitätsfehler mißt und den Antrieb der Reproduktionsgeräte im Betrieb entsprechend korrigiert. Verfahren zur Längenmessung, welche die benötigte Genauigkeit liefern, sind zum Beispiel die Meßwerterfassung mittels Interferometer oder Glasmaßstäben. Deren Auflösung müßte jedoch wesentlich höher als die verlangte Meßgenauigkeit gewählt werden, da diese Verfahren überlagerte systematische Fehler aufweisen, welche die theoretisch erreichbare Auflösung um ein Mehrfaches übersteigen. Außerdem sind solche hochauflösenden Längenmeßsysteme in Herstellung und Anwendung äußerst aufwendig.

Der Erfindung liegt die Aufgabe zugrunde, ein verfahren und eine Vorrichtung zur Linearitätsmessung derart zu verbessern, daß bei einem Reproduktionsgerät eine einfache und kostengünstige Linearitätsmessung ermöglicht wird.

Diese Aufgabe wird bezüglich des Verfahrens durch die Merkmale des Anspruchs 1 und bezüglich der Vorrichtung durch die Merkmale des Anspruchs 16 gelöst. Vorteilhafte Ausgestaltungen und Weiterbildungen sind in den Unteransprüchen angegeben.

Indem die benötigten Einrichtungen in das Reproduktionsgerät integriert werden bzw. bereits darin vorhanden sind, kann das Verfahren komplett maschinenintem durchgeführt werden. Alternativ kann ein geeignetes Meßwerkzeug in die Maschine eingelegt werden, das nach dem Aufnehmen und Speichern der Daten wieder entnommen wird. Die Auswertung der Daten kann entweder im Reproduktionsgerät oder außerhalb z.B. auf einem Personalcomputer durchgeführt werden.

Die Zählung der diskreten Schritte steht in einem Reproduktionsgerät, das über einen inkrementalen Antrieb des Arbeitswagens verfügt, zum Beispiel einen Schrittmotor, ohnehin zur Verfügung, so daß die maschineninternen Meßinkremente zusätzlich zur Durchführung des erfindungsgemäßen Verfahrens ausgenutzt werden können. Andernfalls lassen sich die Zählwerte leicht elektronisch gewinnen, z.B. mittels eines Inkrementgebers, der mit dem Antrieb verbunden ist. Somit können schon vorhandene maschineninterne Meßinkremente wie z.B. die Schritte eines Schrittmotors oder Drehgebertakte zusätzlich zur Durchführung des Verfahren genutzt werden.

Die einzigen mechanischen Teile, die präzise gefertigt bzw. justiert werden müssen, sind der Zusatzwagen und dessen Antrieb. Diese Präzisionsanforderungen können jedoch ohne großen Aufwand erfüllt werden, da die mit Hilfe des Zusatzwagens festgelegte Länge wesentlich kürzer als der gesamte Verfahrweg des Arbeitswagens ist.

In einer bevorzugten Ausführungsform des erfindungsgemäßen Verfahrens wird zu Beginn der Arbeitswagen an den Anfang der Strecke gefahren, und der Zusatzwagen wird in eine erste Relativposition zwischen dem Arbeitswagen und dem Zusatzwagen gebracht. Anschließend wird der Zusatzwagen in eine zweite Relativposition zwischen dem Arbeitswagen und dem Zusatzwagen gebracht, wobei der Abstand zwischen der ersten und der zweiten Relativposition der Länge einer Teilstrecke entspricht. Als nächstes wird der Arbeitswagen vorgeschoben, während die diskreten Schritte gezählt werden und während der Zusatzwagen an Ort und Stelle bleibt. Der Arbeitswagen wird gestoppt, sobald die erste Relativposition zwischen dem Arbeitswagen und dem Zusatzwagen wiederhergestellt ist. Anschließend wird der Zusatzwagen wieder in die zweite Relativposition gebracht, während der Arbeitswagen an Ort und Stelle bleibt, und das abwechselnde Vorschieben von Arbeitswagen und Zusatzwagen wird wiederholt, bis die gesamte Strecke vermessen ist.

Vorzugsweise haben die aufeinanderfolgend durchfahrenen Teilstrecken alle die gleiche Länge. Dadurch wird sowohl die Festlegung der genau definierten Längen auch die Auswertung der Meßergebnisse erleichtert. Speziell können in diesem Fall die beiden Relativpositionen zwischen dem Arbeitswagen und dem Zusatzwagen durch sehr einfache Mittel wie mechanische Anschläge, elektromechanische Antriebe und/oder optische Sensoren festgelegt bzw. hergestellt werden. Die erste Relativposition kann z.B. mit Hilfe eines Anschlags festgelegt werden, während für die Festlegung der zweiten Relativposition eher optische Mittel wie z.B. ein Differenzlichtsensor geeignet sind.

Vorzugsweise verfügt der Zusatzwagen über eine Selbsthemmung, um in der ersten Relativposition stehen zu bleiben, wenn der Arbeitswagen vorgeschoben wird. Alternativ kann eine aktive Bremse oder sonstige Blockiervorrichtung für den Zusatzwagen vorgesehen sein.

Der Zusatzwagen wird vorzugsweise auf der ohnehin vorhandenen Linearführung für den Arbeitswagen geführt, er kann aber auch eine eigene Führungsbahn aufweisen. Eine eigene Führungsbahn für den Zusatzwagen kann unter Umständen günstiger sein, z.B. wenn der Zusatzwagen ein Meßwerkzeug darstellt, das zur Durchführung des Verfahrens in das Reproduktionsgerät eingelegt und anschließend wieder entnommen wird. In diesem Fall kann das Meßwerkzeug auch zur Linearitätsmessung an anderen Maschinen genutzt werden.

Das erfindungsgemäße Verfahren ist so wenig aufwendig und so einfach durchführbar, daß man Reproduktionsgeräte standardmäßig mit dem Zusatzwagen ausrüsten kann. Dadurch kann beim Einschalten des Reproduktionsgerätes und/oder auf Anforderung durch einen Bediener des Reproduktionsgerätes ein Selbstabgleich durchgeführt werden, indem die berechneten Abweichungen zwischen den Werten für den Verfahrweg des Arbeitswagens, die sich auf der Basis der Teilstrecken ergeben, und den Werten für den Verfahrweg des Arbeitswagens, die sich durch die Zählung der Schritte ergeben, zur Korrektur des Antriebs des Arbeitswagens im nachfolgenden Betrieb des Reproduktionsgerätes verwendet werden.

Bei vielen Reproduktionsgeräten wird der Arbeitswagen mittels einer langgestreckten Gewindespindel verfahren, die von einem Antriebsmotor zur Drehung angetrieben wird. Die Abweichungen zwischen den Werten für den Verfahrweg des Arbeitswagens, die sich auf der Basis der Teilstrecken ergeben, und den Werten für den Verfahrweg des Arbeitswagens, die sich durch die Zählung der Schritte ergeben, entsprechen in diesem Fall Abweichungen der Istwerte der Spindelsteigung von den Sollwerten der Spindelsteigung.

Im Falle, daß der Arbeitswagen über eine Zahnstange, einen Zahnriemen oder dergleichen verfahren wird, liefert das Verfahren Abweichungen der Istwerte der Zahnteilung von den Sollwerten der Zahnteilung.

Das erfindungsgemäße Verfahren eignet sich zum Beispiel für Reproduktionsgeräte, deren Arbeitswagen mittels formschlüssig verbundener Kraftübertragungselemente wie Spindeln, Zahnstangen, Zahnriemen und/oder Zahnräder angetrieben wird, die zwar keinen Schlupf, herstellungsbedingt jedoch reproduzierbare und wiederkehrende Linearitätsfehler einschließlich Steigungs- oder Teilungsfehlern aufweisen, die sowohl periodisch wie auch aperiodisch sein können.

Da diese Fehler im nachfolgenden Betrieb des Reproduktionsgerätes durch entsprechende Korrektur des Antriebs ausgeglichen werden können, müssen die Kraftübertragungselemente bei Durchführung des erfindungsgemäßen Verfahrens lediglich die Anforderung erfüllen, daß sie wiederkehrende Fehler erzeugen. Zum Beispiel kann man eine einfache rollierte Spindel verwenden.

Das erfindungsgemäße Verfahren eignet sich auch für Reproduktionsgeräte, deren Arbeitswagen auf irgendeine andere Weise als mittels mechanischer Kraftübertragungselemente angetrieben wird, sofern diese wiederkehrende Fehler aufweisen, die korrigiert werden können. So ein Antrieb wäre zum Beispiel ein elektromagnetischer Linearmotor, dessen Läufer am Arbeitswagen befestigt ist.

Falls für den Vorschub des Arbeitswagens eine Spindel verwendet wird, ist es günstig, wenn diese durch einen Schrittmotor zur Drehung angetrieben wird. Schrittmotoren sind kostengünstig und mit sehr hochauflösender Inkrementierung der Umdrehung sowie vernachlässigbaren systematischen Fehlern, qualitativ mit Drehgebern und Taktscheiben vergleichbar, erhältlich.

Zum Beispiel im Falle einer Spindel ist vorteilhaft, wenn die Länge der Teilstrekken, die während eines Meßvorgangs aufeinanderfolgend durchfahren werden, unter wenigstens zwei verschiedenen vordefinierten Werten wählbar ist, von denen wenigstens einer wesentlich kleiner als die Spindelsteigung ist und wenigstens einer wesentlich größer als die Spindelsteigung ist. Auf diese Weise kann man nach Belieben kurzperiodische Steigungsfehler, d.h. Fehler innerhalb einer Spindelumdrehung, und/oder langperiodische Steigungsfehler, die sich über mehrere Spindelumdrehungen erstrecken, möglichst exakt erfassen. Für Zahntriebe gilt dies entsprechend in bezug auf die Zahnteilung.

Die Erfindung wird nachfolgend anhand der Fig. 1 bis 4 näher erläutert.

Es zeigen:

Fig. 1    eine Prinzipskizze eines Teils eines Reproduktionsgerätes, die einen Arbeitswagen und einen Zusatzwagen in einer ersten Relativposition zeigt,

Fig. 2    eine Prinzipskizze eines Teils eines Reproduktionsgerätes, die einen Arbeitswagen und einen Zusatzwagen in einer zweiten Relativposition zeigt,

Fig. 3     eine grafische Darstellung der Spindelsteigung in Abhängigkeit von Verfahrweg und

Fig. 4     ein Flußdiagramm zur näheren Erläuterung des Meßvorgangs.

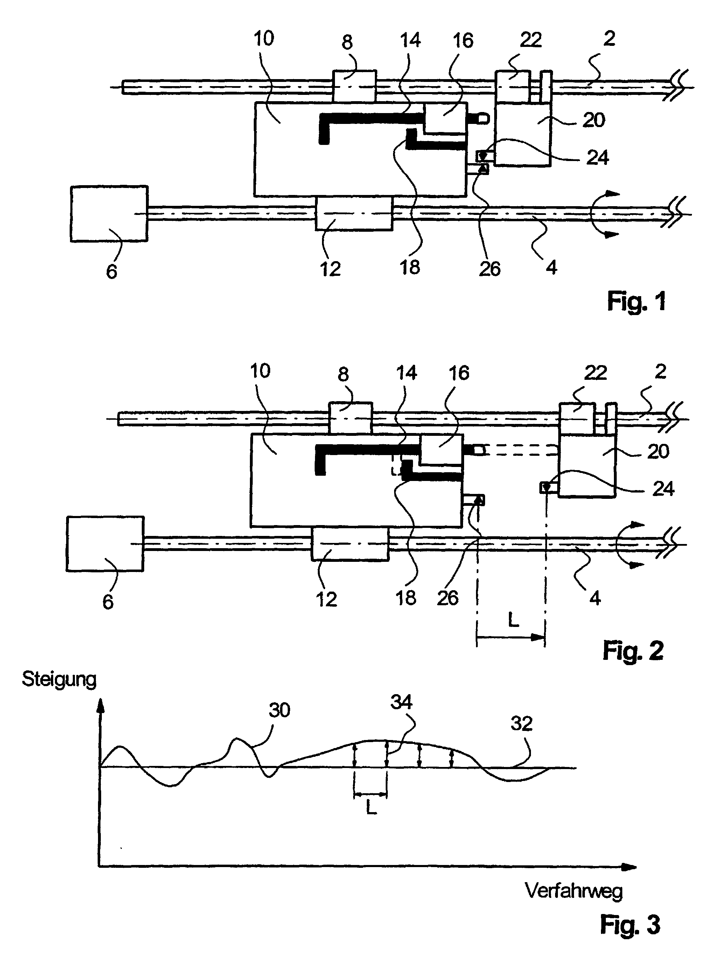

In Fig. 1 enthält ein Reproduktionsgerät wenigstens eine feststehende langgestreckte Linearführung (2), die sich quer über die Breite oder Länge eines nicht gezeigten Mediums erstreckt, das optisch abgetastet werden soll oder auf dem optische Informationen aufgezeichnet werden sollen. Parallel zu der Linearführung (2) erstreckt sich eine langgestreckte Spindel (4), die außen mit Gewinde versehen ist. Die Spindel (4) ist an einem Ende mit einem Schrittmotor (6) verbunden, der die Spindel (4) schrittweise dreht, wenn man ihm elektrische Steuerimpulse zuführt. Jeder Schritt entspricht einem konstanten Drehwinkel der Spindel (4), beispielsweise 1/10000 Umdrehung. Die Drehgeschwindigkeit der Spindel (4) entspricht der Frequenz der dem Schrittmotor (6) zugeführten Steuerimpulse.

Auf der wenigstens einen Linearführung (2) ist mittels eines schematisch eingezeichneten Gleitlagers (8) ein Arbeitswagen (10) gelagert, der in Richtung der Linearführung (2) verschiebbar ist. Der Arbeitswagen (10) steht durch ein schematisch eingezeichnetes Verriegelungselement (12), z.B. eine spielfreie Schloßmutter, mit dem Gewinde der Spindel (4) in Eingriff. Somit bewegt sich der Arbeitswagen (10) langsam nach rechts oder links in der Figur, wenn der Schrittmotor (6) die Spindel (4) in der einen oder anderen Richtung dreht.

Der Arbeitswagen (10) trägt eine nicht dargestellte Abtast- oder Aufzeichnungsvorrichtung, zum Beispiel einen Sensor oder ein Sensorarray zum optischen Abtasten (Scannen) von Vorlagen, einen Gravierkopf, einen Belichtungskopf oder einen Druckkopf.

Außerdem trägt der Arbeitswagen (10) einen länglichen Meßintervallschieber (14), der sich parallel zur Linearführung (2) erstreckt und in einem Gehäuse (16) gelagert ist, so daß der Meßintervallschieber (14) parallel zur Linearführung (2) in bezug auf den Arbeitswagen (10) verschiebbar ist. Der Bewegungsspielraum des Meßintervallschiebers (14) in Vorwärtsrichtung, d. h. in der Figur nach rechts, ist genau definiert. Und zwar kann der Meßintervallschieber (14) vorgeschoben werden, bis er gegen einen Anschlag (18) stößt, der am Arbeitswagen (10) befestigt ist. Der Meßintervallschieber (14) nimmt dann die in Fig. 2 gestrichelt eingezeichnete Position in bezug auf den Arbeitswagen (10) ein. Fig. 1 zeigt die zurückgezogene Position des Meßintervallschiebers (14), die nicht genau definiert zu sein braucht. Nicht eingezeichnet ist ein geeigneter elektromagnetischer Antrieb für den Meßintervallschieber (14), mit dem dieser vorgeschoben und nötigenfalls zurückgezogen werden kann. Ein solcher Antrieb kann zum Beispiel ein im Gehäuse (16) eingebauter Elektromagnet oder Elektromotor sein.

Auf der Linearführung (2) und ggf. weiteren, parallelen Linearführungen ist außerdem ein Zusatzwagen (20) mittels eines Gleitlagers (22) verschiebbar gelagert. Die Lagerung des Zusatzwagen (20) auf der Linearführung (2) verfügt über irgendeine Art von Selbsthemmung, etwa eine Rutschdämpfung, so daß der Zusatzwagen (20) normalerweise an Ort und Stelle stehen bleibt und nur unter Überwindung der Selbsthemmung verschoben werden kann.

In einer nicht dargestellten alternativen Ausführungsform ist der Meßintervallschieber (14) nicht auf dem Arbeitswagen (10), sondern auf dem Zusatzwagen (20) angebracht.

Am Arbeitswagen (10) und am Zusatzwagen (20) ist jeweils ein Teil einer Vorrichtung zur Erfassung einer ersten Relativposition angebracht. In diesem Beispiel ist am Zusatzwagen (20) eine Lichtquelle (24) befestigt, und am Arbeitswagen (10) ist eine Differenzdiode (26) befestigt. Die Lichtquelle (24) erzeugt einen kleinen Leuchtfleck auf der Differenzdiode (26), wenn sich der Arbeitswagen (10) und der Zusatzwagen (20) in der in Fig. 1 gezeigten ersten Relativposition befinden. Die Differenzdiode (26), die zwei eng benachbarte lichtempfindliche Flächen aufweist, deren Ausgangssignale miteinander verglichen werden, ermöglicht eine sehr exakte Festlegung der ersten Relativposition.

Unter Bezugnahme auf Figuren 1, 2 und 4 wird nun das Verfahren zur Messung der Linearität der Spindel (4) beschrieben. Dieses Verfahren kann automatisch durchgeführt werden, zum Beispiel gesteuert durch einen Mikroprozessor.

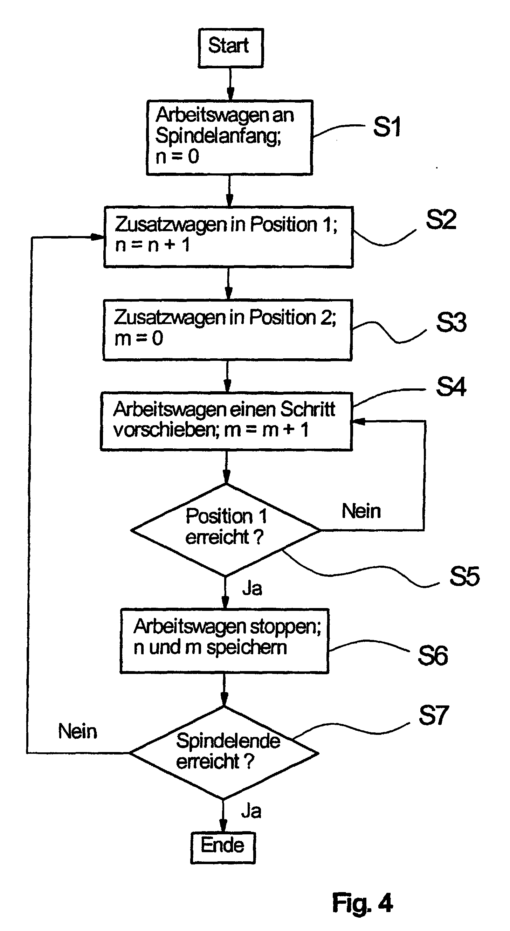

Zuerst wird der Arbeitswagen (10) mittels des Schrittmotors (6) in eine genau definierte Startposition ganz links in Fig. 1 gebracht und dort festgehalten (S1 in Fig. 4). Der Zusatzwagen (20) wird in die erste Relativposition (Fig. 1) zum Arbeitswagen (10) gebracht, die dadurch festgelegt wird, daß die Differenzdiode (26) die korrekte Lage des Leuchtflecks der Lichtquelle (24) registriert (S2).

Als nächstes wird der Meßintervallschieber (14) bei stillstehendem Arbeitswagen (10) bis zum Anschlag (18) ausgefahren. Dadurch wird der Zusatzwagen (20) um ein genau definiertes Meßintervall L in die zweite Relativposition (Fig. 2) verschoben, wo er aufgrund der Selbsthemmung stehen bleibt (S3). Der Meßintervallschieber (14) kann nun zurückgezogen werden, oder der Antrieb des Meßintervallschiebers (14) wird je nach Arbeitsprinzip deaktiviert oder ausgekuppelt, so daß der Meßintervallschieber (14) im weiteren Verlauf leichtgängig zurückgleiten kann.

Als nächstes wird die Spindel (4) mittels des Schrittmotors (6) drehen gelassen, so daß der Arbeitswagen (10) schrittweise langsam vorgeschoben wird. Nach jedem Vorschubschritt (S4) wird geprüft, ob die erste Relativposition (Fig. 1) zwischen dem Arbeitswagen (10) und dem Zusatzwagen (20) wieder erreicht ist (S5). Der Antrieb des Arbeitswagens (10) wird gestoppt (S6), sobald die Differenzdiode (26) registriert, daß die erste Relativposition erreicht ist.

Übrigens muß die Bewegung des Arbeitswagens (10) während der Linearitätsmessung so langsam erfolgen, daß der Arbeitswagen (10) praktisch sofort zum Stehen kommt, ohne über die erste Relativposition hinaus zu fahren. Eine größere Meßgeschwindigkeit läßt sich erreichen, wenn man zum Beispiel eine weitere Lichtquelle oder Differenzdiode verwendet, um kurz vor dem Erreichen der ersten Relativposition ein Signal zu erzeugen, die Meßgeschwindigkeit herabzusetzen.

Anschließend wird geprüft, ob das Ende der Spindel (4) bzw. das Ende der zu vermessenden Strekke erreicht ist (S7). Falls nicht, wird der Zusatzwagen (20) bei stillstehendem Arbeitswagen (10) wieder in die erste Relativposition gebracht (S2), und das Verfahren wird fortgesetzt, bis das Spindelende erreicht ist.

Zu jedem Meßintervall L werden die laufende Nummer n (S2) des Meßintervalles, die am Anfang (S1 ) auf "Null" gesetzt wurde, sowie die Anzahl $m_i$ der diskreten Schritte, die für das Durchfahren des i-ten Meßintervalles L benötigt wurden, gespeichert (S6). Sei x die konstante Länge der diskreten Schritte, die der Arbeitswagen (10) vollführt, wenn er vom Schrittmotor (6) vorgeschoben wird. Die Größe

$$f(n) = n * L - x * \sum_{i=1}^{n} m_i$$

ist die Differenz zwischen Werten für den Verfahrweg n L des Arbeitswagens (10), die sich auf der Basis der Teilstrecken oder Meßintervalle L ergeben, und Werten für den Verfahrweg des Arbeitswagens (10), die sich durch Zählung der insgesamt benötigten Schritte ergeben.

Daraus läßt sich die tatsächliche Steigung der Spindel (4) in Abhängigkeit vom Verfahrweg des Arbeitswagens (10) berechnen. In Fig. 3 ist die Ist-Steigung der Spindel (4) durch eine Kurve (30) dargestellt. Die Soll-Steigung ist durch eine gerade Linie (32) dargestellt. Senkrechte Doppelpfeile (34) zeigen an einigen Stellen die Abweichungen zwischen Soll- und Ist-Steigung, die den Werten von f(n) entsprechen. Der waagerechte Doppelpfeil zeigt die Länge eines Meßintervalles L an.

Die ermittelten Größen f(n) oder davon abgeleitete Größen werden gespeichert und im nachfolgenden Betrieb des Reproduktionsgerätes verwendet, um die Frequenz der Steuerimpulse für den Schrittmotor (6) in jedem Meßintervall L so zu korrigieren, daß sich der Arbeitswagen (10) exakt linear bewegt. In einem Meßintervall L, in dem die Ist-Steigung kleiner als die Soll-Steigung ist, wird die Frequenz der Steuerimpulse etwas heraufgesetzt, und in einem Meßintervall L, in dem die Ist-Steigung größer als die Soll-Steigung ist, wird die Frequenz der Steuerimpulse etwas herabgesetzt. Diese Korrektur wird ebenfalls automatisch von einem Mikroprozessor durchgeführt.

Die Länge L der Meßintervalle wird in Anpassung an die Steigung der Spindel (4), die Auflösung des Schrittmotors (6) und den zu vermessenden bzw. zu korrigierenden Fehler gewählt. Als Beispiel habe die Spindel (4) eine Steigung von 2 mm und habe der Schrittmotor (6) eine Winkelauflösung von 10000 diskreten Schritten pro Umdrehung. Die Länge x der diskreten Schritte, die der Arbeitswagen (10) vollführt, wenn er vom Schrittmotor (6) vorgeschoben wird, beträgt dann 0,2 μm. Wird das Meßintervall L ebenso groß wie die Steigung gemacht, d.h. 2 mm, hat die Linearitätsmessung pro Meßintervall eine Genauigkeit von 0,2 μm. Mit jedem weiteren Meßintervall addieren sich jedoch Fehler, die man trotz aller Sorgfalt bei der Festlegung der Länge L mach. Mit zunehmender Spindellänge wird der Fehler daher größer.

Um dennoch langperiodische (niederfrequente) Schwankungen der Spindelsteigung über die gesamte Spindellänge genau erfassen zu können, wählt man die Länge L der Meßintervalle größer, z.B. zehn oder mehr Spindelsteigungen. Um kurzperiodische (hochfrequente) Steigungsfehler, d.h. Fehler innerhalb einer Spindelumdrehung, genau zu erfassen, wählt man die Länge L der Meßintervalle kleiner, z.B. ein Zehntel der Spindelsteigung. Messungen mit kleinem bzw. großem Meßintervall können wahlweise einzeln oder hintereinander durchgeführt werden, um verschiedene Arten von Steigungsfehlem exakt zu erfassen.

Wird eine Genauigkeit der Linearitätsmessung pro Meßintervall von beispielsweise 0,2 μm verlangt, so muß die Differenzdiode (26) die Position der Lichtquelle (24) mit eben dieser Genauigkeit erkennen können. Eine solche Genauigkeit ist mit Differenzdioden problemlos erreichbar. Im Prinzip kommen aber auch andere Sensoren zur Positionserkennung in Betracht, beispielsweise Gabellichtschranken, sofern die im Einzelfall bestehenden Genauigkeitsanforderungen erfüllt werden.

Nachfolgend werden einige mögliche Abwandlungen und Weiterbildungen des oben beschriebenen Ausführungsbeispiels beschrieben.

Der Meßintervallschieber (14) wurde im Ausführungsbeispiel als ein einfacher Schieber mit Gleitlagerung beschrieben. Bei so einer Vorrichtung ist es möglicherweise schwierig, die exakte Reproduzierbarkeit des Vorschubweges sicherzustellen. Um Probleme mit Lagerspiel und Verschleiß zu vermeiden, kann der Meßintervallschieber 14 z.B. auf einer Prismenführung mit Kugelumlauf gleiten.

Statt eines mechanischen Anschlags (18) für den Meßintervallschieber (14) kann ein Sensor wie z.B. eine weitere Differenzdiode verwendet werden, mit dessen Hilfe der Antrieb des Meßintervallschiebers (14) gestoppt wird, sobald er vollständig ausgefahren ist. In diesem Fall wird der Meßintervallschieber (14) vorzugsweise ebenfalls durch einen hochauflösenden Schrittmotor angetrieben. Falls dieser Schrittmotor mit dem Meßintervallschieber (14) über eine Präzisionsgewindespindel verbunden wird, die wesentlich weniger aufwendig wäre als eine Präzisionsspindel über die gesamte Maschinenlänge, könnte auf den Sensor zur Erfassung der Endposition des Meßintervallschiebers (14) verzichtet werden. Außerdem wäre der Vorschubweg des Meßintervallschiebers (14), d.h. das Meßintervall L, völlig frei wählbar. In diesem Fall könnten die Meßintervalle L innerhalb eines Meßvorgangs verschieden lang gewählt werden, d.h. es bestünde die Möglichkeit, die Spindel 4 abschnittsweise mit verschiedener Auflösung zu vermessen.

Der Zusatzwagen (20) muß nicht auf der gleichen Linearführung (2) wie der Arbeitswagen (10) geführt sein, sondern er kann über eine eigene Führung verfügen, etwa eine Prismenführung mit Kugelumlauf.

Anstelle einer Selbsthemmung für den Zusatzwagen (20) kann eine aktive Bremse vorgesehen sein, etwa eine mechanische Blockiervorrichtung oder ein Elektromagnet, mit dem der Zusatzwagen (20) auf seiner Führung festgehalten werden kann.

Die Anordnung der Lichtquelle (24) und der Differenzdiode (26) am Zusatzwagen (20) bzw. am Arbeitswagen (10) kann vertauscht sein. Weiterhin brauchen die Lichtquelle (24) und/oder die Differenzdiode (26) nicht am Zusatzwagen (20) bzw. am Arbeitswagen (10) angebracht sein, sondern sie können an anderer Stelle im Reproduktionsgerät angeordnet sein. In so einem Fall tragen der Zusatzwagen (20) bzw. der Arbeitswagen (10) irgendeine Lichtumlenkeinrichtung, z.B. einen oder mehrere Reflektoren, die das Licht von der Lichtquelle empfangen bzw. an die Differenzdiode oder sonstige Sensorvorrichtung weiterieiten. Eine solche externe Anordnung ist besonders bei dem Zusatzwagen (20) zweckmäßig, da man sich flexible elektrische Leitungen zum Zusatzwagen (20) erspart.

Im Ausführungsbeispiel wurden die Drehwinkelinkremente des Schrittmotors (6) genutzt. Anstelle von Drehwinkelinkrementen können auch hinreichend genaue Weg- oder Zeitinkremente genutzt werden, falls der Antriebsmotor derartige Inkremente konstruktionsbedingt zur Verfügung stellt oder falls irgendein Meßfühler am Antrieb vorgesehen wird, der entsprechende Weg- oder Zeitinkremente erzeugt.

## Patentansprüche

1. Verfahren zur Linearitätsmessung bei einem Reproduktionsgerät, das einen Arbeitswagen enthält, der eine Abtast- oder Aufzeichnungsvorrichtung trägt und der in diskreten Schritten entlang einer geraden Strecke verfahrbar ist, **dadurch gekennzeichnet, daß**

   - der Arbeitswagen (10) aufeinanderfolgend um Teilstrecken verfahren wird, die jeweils wesentlich länger als der einem Schritt entsprechende Verfahrweg und wesentlich kürzer als die gesamte Strecke sind und die jeweils eine genau definierte Länge (L) haben, die mit Hilfe eines Zusatzwagens (20) festgelegt wird, der in der gleichen Richtung wie der Arbeitswagen verfahrbar ist,
   - die für jede Teilstrecke benötigte Anzahl von Schritten gezählt wird und
   - Abweichungen zwischen Werten für den Verfahrweg des Arbeitswagens, die sich auf der Basis der Teilstrecken ergeben, und Werten für den Verfahrweg des Arbeitswagens, die sich durch die Zählung der Schritte ergeben, berech-net werden.

2. Verfahren nach Anspruch 1, **dadurch gekennzeichnet, daß**

   a) der Arbeitswagen (10) an den Anfang der Strecke gefahren wird und der Zusatzwagen (20) in eine erste Relativposition (Fig. 1) zwischen dem Arbeitswagen und dem Zusatzwagen gebracht wird,
   b) der Zusatzwagen in eine zweite Relativposition (Fig. 2) zwischen dem Arbeitswagen und dem Zusatzwagen gebracht wird, wobei der Abstand zwischen der ersten und der zweiten Relativposition der Länge (L) einer Teilstrecke entspricht,
   c) der Arbeitswagen vorgeschoben wird, während die diskreten Schritte gezählt werden und während der Zusatzwagen an Ort und Stelle bleibt,
   d) der Arbeitswagen gestoppt wird, sobald die erste Relativposition (Fig. 1) zwischen dem Arbeitswagen und dem Zusatzwagen wiederhergestellt ist, und
   e) die Verfahrenschritte b) bis d) über die zu vermessende Strecke wiederholt werden.

3. Verfahren nach Anspruch 1 oder 2, **dadurch gekennzeichnet, daß** die aufeinanderfolgend durchfahrenen Teilstrecken alle die gleiche Länge (L) haben.

4. Verfahren nach Anspruch 2 oder 3, **dadurch gekennzeichnet, daß** die erste Relativposition (Fig. 1) zwischen dem Arbeitswagen (10) und dem Zusatzwagen (20) durch mechanische Mittel (14, 16, 18) festgelegt wird.

5. Verfahren nach Anspruch 4, **dadurch gekennzeichnet, daß** die mechanischen Mittel zur Festlegung der ersten Relativposition (Fig. 1) zwischen dem Arbeitswagen (10) und dem Zusatzwagen (20) einen Anschlag (18) umfassen.

6. Verfahren nach einem der Ansprüche 2 bis 5, **dadurch gekennzeichnet, daß** der Zusatzwagen (20) vor dem Abfahren jeder Teilstrecke durch elektromechanische Mittel (16) in die erste Relativposition (Fig. 1) gebracht wird.

7. Verfahren nach einem der Ansprüche 2 bis 5, **dadurch gekennzeichnet, daß** der Zusatzwagen (20) selbsthemmend oder selbsthaltend in der ersten Relativposition (Fig. 1) stehen bleibt, während der Arbeitswagen (20) vorgeschoben wird.

8. Verfahren nach einem der Ansprüche 2 bis 5, **dadurch gekennzeichnet, daß** die zweite Relativposition (Fig. 2) zwischen dem Arbeitswagen (10) und dem Zusatzwagen (20) durch optische Mittel (24, 26) festgelegt wird.

9. Verfahren nach Anspruch 8, **dadurch gekennzeichnet, daß** die optischen Mittel eine Lichtquelle (24) und/oder einen Reflektor, die bzw. der an einem der beiden Wagen befestigt ist, und einen Differenzlichtsensor (26) und/oder einen Reflektor umfassen, die bzw. der an dem anderen der beiden Wagen befestigt ist.

10. Verfahren nach einem der vorhergehenden Ansprüche, **dadurch gekennzeichnet, daß** es beim Einschalten des Reproduktionsgerätes und/oder auf Anforderung durch einen Bediener des Reproduktionsgerätes durchgeführt wird und daß die dabei berechneten Abweichungen zwischen Werten für den Verfahrweg des Arbeitswagens (10), die sich auf der Basis der Teilstrecken ergeben, und Werten für den Verfahrweg des Arbeitswagens, die sich durch die Zählung der Schritte ergeben, zur Korrektur eines Antriebs (6) des Arbeitswagens im nachfolgenden Betrieb des Reproduktionsgerätes verwendet werden.

11. Verfahren nach einem der vorhergehenden Ansprüche, **dadurch gekennzeichnet, daß** der Arbeitswagen (10) mittels einer langgestreckten Gewindespindel (4) entlang der geraden Strecke verfahrbar ist, wobei die Abweichungen zwischen Werten für den Verfahrweg des Arbeitswagens, die sich auf der Basis der Teilstrecken ergeben, und Werten für den Verfahrweg des Arbeitswagens, die sich durch die Zählung der Schritte ergeben, Abweichungen der Istwerte der Spindelsteigung von den Sollwerten der Spindelsteigung entsprechen.

12. Verfahren nach Anspruch 11, **dadurch gekennzeichnet, daß** die Spindel (4) eine rollierte Spindel ist.

13. Verfahren nach Anspruch 11 oder 12, **dadurch gekennzeichnet, daß** die Spindel (4) in diskreten Schritten drehbar ist, die konstanten Drehwinkeln der Spindel entsprechen.

14. Verfahren nach Anspruch 13, **dadurch gekennzeichnet, daß** die Spindel (4) durch einen Schrittmotor (6) zur Drehung angetrieben wird.

15. Verfahren nach einem der Ansprüche 11 bis 14, **dadurch gekennzeichnet, daß** die Länge der Teilstrecken, die während eines Meßvorgangs aufeinanderfolgend durchfahren werden, unter wenigstens zwei verschiedenen vordefinierten Werten wählbar ist, von denen wenigstens einer wesentlich kleiner als die Spindelsteigung ist und wenigstens einer wesentlich größer als die Spindelsteigung ist.

16. Vorrichtung zur Linearitätsmessung bei einem Reproduktionsgerät, das einen Arbeitswagen enthält, der eine Abtast- oder Aufzeichnungsvorrichtung trägt und der in diskreten Schritten entlang einer geraden Strecke verfahrbar ist, **gekennzeichnet durch** einen Zusatzwagen (20), der in der gleichen Richtung wie der Arbeitswagen (10) zwischen ersten (Fig. 1) und zweiten (Fig. 2) Relativpositionen verfahrbar ist, deren Abstand Teilstrecken von genau definierter Länge (L) entspricht, die jeweils wesentlich länger als der einem Schritt entsprechende Verfahrweg und wesentlich kürzer als die gesamte Strecke sind, und **durch** eine Einrichtung zur Berechnung von Abweichungen zwischen Werten für den Verfahrweg des Arbeitswagens, die sich auf der Basis der Teilstrecken ergeben, und Werten für den Verfahrweg des Arbeitswagens, die sich **durch** die Zählung der Schritte ergeben.

17. Vorrichtung nach Anspruch 16, **dadurch gekennzeichnet, daß** die aufeinanderfolgend durchfahrenen Teilstrecken alle die gleiche Länge (L) haben.

18. Vorrichtung nach Anspruch 16 oder 17, **dadurch gekennzeichnet, daß** zur Festlegung der ersten Relativposition (Fig. 1) zwischen dem Arbeitswagen (10) und dem Zusatzwagen (20) mechanische Mittel (14, 16, 18) vorgesehen sind.

19. Vorrichtung nach Anspruch 18, **dadurch gekennzeichnet, daß** die mechanischen Mittel zur Festlegung der ersten Relativposition (Fig. 1) zwischen dem Arbeitswagen (10) und dern Zusatzwagen (20) einen Anschlag umfassen.

20. Vorrichtung nach einem der Ansprüche 16 bis 19, **dadurch gekennzeichnet, daß** elektromechanische Mittel (16) vorgesehen sind, um den Zusatzwagen (20) vor dem Abfahren jeder Teilstrecke in die erste Relativposition (Fig. 1) zu bringen.

21. Vorrichtung nach einem der Ansprüche 16 bis 20, **dadurch gekennzeichnet, daß** der Zusatzwagen (20) eine Selbsthemmung aufweist.

**22.** Vorrichtung nach einem der Ansprüche 16 bis 21, **dadurch gekennzeichnet, daß** zur Festlegung der zweiten Relativposition (Fig. 2) zwischen dem Arbeitswagen (10) und dem Zusatzwagen (20) optische Mittel (24, 26) vorgesehen sind.

**23.** Vorrichtung nach Anspruch 22, **dadurch gekennzeichnet, daß** die optischen Mittel eine Lichtquelle (24) und/oder einen Reflektor, die bzw. der an einem der beiden Wagen befestigt ist, und einen Differenzlichtsensor (26) und/oder einen Reflektor umfassen, die bzw. der an dem anderen der beiden Wagen befestigt ist.

**24.** Vorrichtung nach einem der Ansprüche 16 bis 23, **dadurch gekennzeichnet, daß** ein Antrieb für den Arbeitswagen (10) eine langgestreckte Gewindespindel (4) enthält, wobei die Abweichungen zwischen Werten für den Verfahrweg des Arbeitswagens, die sich auf der Basis der Teilstrecken ergeben, und Werten für den Verfahrweg des Arbeitswagens, die sich durch die Zählung der Schritte ergeben, Abweichungen der Istwerte der Spindelsteigung von den Sollwerten der Spindelsteigung darstellen.

**25.** Vorrichtung nach Anspruch 24, **dadurch gekennzeichnet, daß** die Spindel (4) eine rollierte Spindel ist.

**26.** Vorrichtung nach Anspruch 24 oder 25, **dadurch gekennzeichnet, daß** die Spindel (4) mit einem Schrittmotor (6) verbunden ist, durch den sie zur Drehung angetrieben wird.

**Claims**

**1.** Method for measuring linearity in reproduction equipment possessing a working carriage which carries scanning or recording apparatus and is traversable in discrete increments along a straight path, **characterized in that**

- the working carriage (10) is successively traversed through path segments each significantly longer than the traversing path corresponding to one increment and significantly shorter than the entire path, and each having a precisely defined length (L) which is set by means of an auxiliary carriage (20) traversable in the same direction as the working carriage,
- the number of increments required for each path segment is counted and
- differences are calculated between values for the traversing path of the working carriage obtained on the basis of the path segments, and values for the traversing path of the working carriage obtained by counting the increments.

**2.** Method according to Claim 1, **characterized in that**

a) the working carriage (10) is moved to the start of the path and the auxiliary carriage (20) is brought into a first relative position (Fig. 1) between the working carriage and the auxiliary carriage,
b) the auxiliary carriage is brought into a second relative position (Fig. 2) between the working carriage and the auxiliary carriage such that the distance between the first and second relative positions is equal to the length (L) of a path segment,
c) the working carriage is advanced, during which time the discrete increments are counted and the auxiliary carriage remains stationary,
d) the working carriage is stopped as soon as the first relative position (Fig. 1) between the working carriage and the auxiliary carriage is re-established, and
e) the method steps b) to d) are repeated over the path to be surveyed.

**3.** Method according to Claim 1 or Claim 2, **characterized in that** the path segments successively traversed all have the same length (L).

**4.** Method according to Claim 2 or Claim 3, **characterized in that** the first relative position (Fig. 1) between the working carriage (10) and the auxiliary carriage (20) is set by mechanical means (14, 16, 18).

**5.** Method according to Claim 4, **characterized in that** the mechanical means for setting the first relative position (Fig. 1) between the working carriage (10) and the auxiliary carriage (20) comprise a stop (18).

**6.** Method according to any one of Claims 2 to 5, **characterized in that** the auxiliary carriage (20) is brought into the first relative position (Fig. 1) by electromechanical means (16) before each path segment is traversed.

**7.** Method according to any one of Claims 2 to 5, **characterized in that** the auxiliary carriage (20) remains self-locked or self-held in the first relative position (Fig. 1) as the working carriage (20) is advanced.

**8.** Method according to any one of Claims 2 to 5, **characterized in that** the second relative position (Fig. 2) between the working carriage (10) and the auxiliary carriage (20) is set by optical means (24, 26).

**9.** Method according to Claim 8, **characterized in that** the optical means comprise a light source (24) andlor a reflector which is or are mounted on one of the two carriages, and a differential light sensor (26) and/or a reflector which is or are mounted on the other of the two carriages.

10. Method according to any one of the preceding claims, **characterized in that** it is carried out when the reproduction equipment is switched on and/or when instigated by an operator of the reproduction equipment and **in that** the differences thus calculated between values for the traversing path of the working carriage (10) obtained on the basis of the path segments and values for the traversing path of the working carriage obtained by counting the increments are used to correct a drive (6) of the working carriage in the ensuing operation of the reproduction equipment.

11. Method according to any one of the preceding claims, **characterized in that** the working carriage (10) is traversable along the straight path by means of an extended threaded spindle (4), and the differences between values for the traversing path of the working carriage obtained on the basis of the path segments and values for the traversing path of the working carriage obtained by counting the increments correspond to deviations of the actual values of the lead of the thread of the spindle from the theoretical values of the lead of the thread of the spindle.

12. Method according to Claim 11, **characterized in that** the spindle (4) is a rolled-threaded spindle.

13. Method according to Claim 11 or Claim 12, **characterized in that** the spindle (4) is rotatable in discrete increments corresponding to constant rotational angles of the spindle.

14. Method according to Claim 13, **characterized in that** the spindle (4) is driven in rotation by a stepping motor.

15. Method according to any one of Claims 11 to 14, **characterized in that** the length of the path segments successively traversed during a measuring pass is selectable from at least two different predefined values of which at least one is significantly smaller than the lead of the thread of the spindle and at least one is significantly greater than the lead of the thread of the spindle.

16. Apparatus for measuring linearity in reproduction equipment possessing a working carriage which carries scanning or recording apparatus and is traversable in discrete increments along a straight path, **characterized by** an auxiliary carriage (20) traversable in the same direction as the working carriage (10) between first (Fig. 1) and second (Fig. 2) relative positions whose distance apart corresponds to path segments of precisely defined length (L), each significantly longer than the traversing path corresponding to one increment and significantly shorter than the entire path, and by a device for calculating differences between values for the traversing path of the working carriage obtained on the basis of the path segments and values for the traversing path of the working carriage obtained by counting the increments.

17. Apparatus according to Claim 16, **characterized in that** the path segments successively traversed all have the same length (L).

18. Apparatus according to Claim 16 or Claim 17, **characterized in that** mechanical means (14, 16, 18) are provided for setting the first relative position (Fig. 1) between the working carriage (10) and the auxiliary carriage (20).

19. Apparatus according to Claim 18, **characterized in that** the mechanical means for setting the first relative position (Fig. 1) between the working carriage (10) and the auxiliary carriage (20) comprise a stop.

20. Apparatus according to any one of Claims 16 to 19, **characterized in that** electromechanical means (16) are provided for bringing the auxiliary carriage (20) is brought into the first relative position (Fig. 1) before each path segment is traversed.

21. Apparatus according to any one of Claims 16 to 20, **characterized in that** the auxiliary carriage (20) is self-locking.

22. Apparatus according to any one of Claims 16 to 21, **characterized in that** optical means (24, 26) are provided for setting the second relative position (Fig. 2) between the working carriage (10) and the auxiliary carriage (20).

23. Apparatus according to Claim 22, **characterized in that** the optical means comprise a light source (24) and/or a reflector which is or are mounted on one of the two carriages, and a differential light sensor (26) and/or a reflector which is or are mounted on the other of the two carriages.

24. Apparatus according to any one of Claims 16 to 23, **characterized in that** a drive for the working carriage (10) has an extended threaded spindle (4), and the differences between values for the traversing path of the working carriage obtained on the basis of the path segments and values for the traversing path of the working carriage obtained by counting the increments represent deviations of the actual values of the lead of the thread of the spindle from the theoretical values of the lead of the thread of the spindle.

**25.** Apparatus according to Claim 24, **characterized in that** the spindle (4) is a rolled-threaded spindle.

**26.** Apparatus according to Claim 24 or Claim 25, **characterized in that** the spindle (4) is connected to a stepping motor (6) by which it is driven in rotation.

## Revendications

**1.** Procédé de mesure de la linéarité dans un appareil de reproduction comportant un chariot de travail portant le dispositif de détection ou d'inscription et qui se déplace suivant des pas discrets le long d'un chemin rectiligne,
**caractérisé en ce que**

- le chariot de travail (10) parcourt successivement des parties de trajet qui sont chaque fois beaucoup plus longues qu'un trajet de déplacement correspondant à un pas et beaucoup plus courtes que tout le trajet et qui ont chaque fois une longueur (L) définie de manière précise, fixée à l'aide d'un chariot auxiliaire (20) mobile dans la même direction que le chariot de travail,
- on compte le nombre de pas nécessaire à chaque trajet partiel et
- on calcule les différences entre les valeurs du trajet du chariot de travail correspondant aux trajets partiels et les valeurs du trajet du chariot de travail résultant du comptage des pas.

**2.** Procédé selon la revendication 1,
**caractérisé en ce que**

a) on met le chariot de travail (10) au début du trajet et le chariot auxiliaire (20) dans une première position relative (figure 1) entre le chariot de travail et le chariot auxiliaire,
b) on met le chariot auxiliaire dans une seconde position relative (figure 2) entre le chariot de travail et le chariot auxiliaire, la distance entre la première et la seconde position relative correspondant à la longueur (L) d'un trajet partiel,
c) on déplace le chariot de travail pendant que l'on compte les pas discrets et pendant que le chariot auxiliaire reste en place,
d) on arrête le chariot de travail dès que l'on retrouve la première position relative (figure 1) entre le chariot de travail et le chariot auxiliaire,
e) on répète les étapes de procédé b)-d) sur tout le trajet à mesurer.

**3.** Procédé selon l'une quelconque des revendications 1 ou 2,
**caractérisé en ce que**
les trajets partiels à parcourir successivement ont tous la même longueur (L).

**4.** Procédé selon l'une quelconque des revendications 2 ou 3,
**caractérisé en ce qu'**
on fixe la première position relative (figure 1) entre le chariot de travail (10) et le chariot auxiliaire (20) par des moyens mécaniques (14, 16, 18).

**5.** Procédé selon la revendications 4,
**caractérisé en ce que**
les moyens mécaniques fixant la première position relative (figure 1) entre le chariot de travail (10) et le chariot auxiliaire (20) comprennent une butée (18).

**6.** Procédé selon l'une quelconque des revendications 2 à 5,
**caractérisé en ce qu'**
avant le départ de chaque trajet partiel on met le chariot auxiliaire (20) par des moyens électromécaniques (16) dans la première position relative (figure 1).

**7.** Procédé selon l'une quelconque des revendications 2 à 5,
**caractérisé en ce que**
le chariot auxiliaire (20) reste immobile par autoblocage ou par autoretenue dans la première position relative (figure 1) pendant que le chariot de travail (20) avance.

**8.** Procédé selon l'une quelconque des revendications 2 à 5,
**caractérisé en ce qu'**
on fixe la seconde position relative (figure 2) entre le chariot de travail (10) et le chariot auxiliaire (20) par des moyens optiques (24, 26).

**9.** Procédé selon la revendication 8,
**caractérisé en ce que**
les moyens optiques comprennent une source lumineuse (24) et/ou un réflecteur fixé à l'un des deux chariots ou au chariot et un capteur de différence de lumière (26) et/ou un réflecteur fixé aux deux chariots ou à l'un des deux chariots.

**10.** Procédé selon l'une quelconque des revendications précédentes,
**caractérisé en ce qu'**
en branchant l'appareil de reproduction et/ou en répondant à une demande de l'opérateur de l'appareil de reproduction le procédé est exécuté, et les déviations alors calculées entre les valeurs du trajet parcouru par le chariot de travail (10) calculées sur la base des chemins partiels et les valeurs du trajet parcouru par le chariot de travail (10) résultant du comptage des pas sont utilisées pour corriger l'entraînement (6) du chariot de travail dans le fonctionnement suivant de l'appareil de reproduction.

**11.** Procédé selon l'une quelconque des revendications précédentes,
**caractérisé en ce que**
le chariot de travail (10) est déplacé le long du chemin rectiligne par une vis (14), longue, et les déviations entre les valeurs du trajet du chariot de travail obtenues par le calcul des trajets partiels et des valeurs du trajet du chariot de travail résultant du comptage des pas correspondent aux déviations entre la valeur réelle du pas de la vis et sa valeur de consigne.

**12.** Procédé selon la revendication 11,
**caractérisé en ce que**
la vis (4) est une vis obtenue par roulage.

**13.** Procédé selon l'une quelconque des revendications 11 ou 12,
**caractérisé en ce que**
la vis (4) peut tourner suivant des pas discrets correspondant à des angles de rotation constants de la vis.

**14.** Procédé selon la revendication 13,
**caractérisé en ce que**
la vis (4) est entraînée en rotation par un moteur pas à pas (6).

**15.** Procédé selon l'une quelconque des revendications 11 à 14,
**caractérisé en ce que**
la longueur des trajets partiels parcourus successivement pendant une opération de mesure est choisie parmi au moins deux valeurs différentes prédéfinies parmi lesquelles au moins l'une est beaucoup plus petite que le pas de la vis et au moins l'autre beaucoup plus grande que le pas de la vis.

**16.** Dispositif de mesure de la linéarité dans un appareil de reproduction comportant un chariot de travail portant le dispositif de détection ou le dispositif d'inscription et qui se déplace suivant des pas discrets le long d'une trajectoire rectiligne,
**caractérisé par**
un chariot auxiliaire (20) déplacé dans la même direction que le chariot de travail (10) entre une première (figure 1) et une seconde position relative (figure 2) la distance entre ces deux positions correspondant à des trajet partiels de longueur définie de manière précise (L) qui sont chaque fois beaucoup plus longues que le trajet correspondant à un pas et beaucoup plus courtes que le trajet total, et une installation pour calculer les déviations entre les valeurs du trajet du chariot de travail résultant du calcul basé sur les trajet partiels et des valeurs du trajet du chariot de travail résultant du comptage des pas.

**17.** Dispositif selon la revendication 16,
**caractérisé en ce que**
les trajets partiels parcourus successivement ont tous la même longueur (L).

**18.** Dispositif selon l'une quelconque des revendications 16 ou 17,
**caractérisé par**
des moyens mécaniques (14, 16, 18) pour fixer la première position relative (figure 1) entre le chariot de travail (10) et le chariot auxiliaire (20).

**19.** Dispositif selon la revendications 18,
**caractérisé en ce que**
les moyens mécaniques pour fixer la première position relative (figure 1) entre le chariot de travail (10) et le chariot auxiliaire (20) comprennent une butée.

**20.** Dispositif selon l'une quelconque des revendications 16 à 19,
**caractérisé par**
des moyens électromécaniques (16) pour mettre le chariot auxiliaire (20) dans la première position relative (figure 1) avant le démarrage de chaque trajet partiel.

**21.** Dispositif selon l'une quelconque des revendications 16 à 20,
**caractérisé en ce que**
le chariot auxiliaire (20) est autobloquant.

**22.** Dispositif selon l'une quelconque des revendications 16 à 21,
**caractérisé par**
des moyens optiques (24, 26) pour fixer la seconde position relative (figure 2) entre le chariot de travail (10) et le chariot auxiliaire (20).

**23.** Dispositif selon la revendication 22,
**caractérisé en ce que**
les moyens optiques comprennent une source lumineuse (24) et/ou un réflecteur fixé sur l'un ou les deux chariots et un capteur de différence de lumière (26) et/ou un réflecteur fixé sur l'autre ou sur les deux chariots.

**24.** Dispositif selon l'une quelconque des revendications 16 à 23,
**caractérisé par**
une vis filetée (4) allongée pour l'entraînement du chariot de travail (10), les déviations entre les valeurs du trajet du chariot de travail résultant du calcul basé sur les trajet partiels et les valeurs du trajet du chariot de travail résultant du calcul par le comptage des pas représentent les déviations entre les valeurs réelles du pas de la vis et les valeurs de consigne du pas.

**25.** Dispositif selon la revendication 24,
**caractérisé en ce que**
la vis (4) est une vis fabriquée par roulage.

**26.** Dispositif selon l'une quelconque des revendications 24 ou 25,
**caractérisé en ce que**
la vis (4) est reliée à un moteur pas à pas (6) assurant son entraînement en rotation.

**Fig. 1**

**Fig. 2**

**Fig. 3**

```
                    ┌─────────┐
                    │  Start  │
                    └─────────┘
                         │
                         ▼
          ┌──────────────────────────┐
          │ Arbeitswagen an          │      S1
          │ Spindelanfang;           │
          │ n = 0                    │
          └──────────────────────────┘
                         │
                         ▼
          ┌──────────────────────────┐
          │ Zusatzwagen in Position 1; │    S2
          │ n = n + 1                │
          └──────────────────────────┘
                         │
                         ▼
          ┌──────────────────────────┐
          │ Zusatzwagen in Position 2; │    S3
          │ m = 0                    │
          └──────────────────────────┘
                         │
                         ▼
          ┌──────────────────────────┐      S4
          │ Arbeitswagen einen Schritt │
          │ vorschieben; m = m + 1   │
          └──────────────────────────┘
                         │
                         ▼
                   ◇ Position 1        Nein
                     erreicht ?  ──────────►
                         │                    S5
                       Ja │
                         ▼
          ┌──────────────────────────┐
          │ Arbeitswagen stoppen;    │
          │ n und m speichern        │      S6
          └──────────────────────────┘
                         │
                         ▼
           Nein   ◇ Spindelende              S7
         ◄─────────  erreicht ?
                         │
                       Ja │
                         ▼
                    ┌─────────┐
                    │  Ende   │
                    └─────────┘
```

**Fig. 4**